# EUROPEAN PATENT SPECIFICATION

(11) **EP 0 509 683 B1**
(45) Date of publication and mention of the grant of the patent: **20.12.1995**
(21) Application number: 92302939.1
(22) Date of filing: 03.04.1992
(51) Int. Cl.: H02K 11/00, H02K 23/66

(54) **Miniature motor**
Miniaturmotor
Moteur miniature

(30) Priority: 16.04.1991 JP 25151/91
(43) Date of publication of application: 21.10.1992
(73) Proprietor: MABUCHI MOTOR KABUSHIKI KAISHA, Matsudo-shi, Chiba-ken (JP)
(72) Inventor: Sato, Makoto, Mabuchi Motor Kabushiki Kaisha, Matsudo-shi, Chiba-ken (JP)
(74) Representative: Hitchcock, Esmond Antony

(56) References cited:
- EP-A- 0 260 040
- DE-U- 9 104 028
- FR-A- 2 656 171
- GB-A- 2 172 754
- US-A- 3 395 298
- US-A- 4 268 770

## Description

This invention relates to miniature electric motors particularly those for use with audio equipment, video equipment and electrical equipment in motor vehicles. It is especially concerned with the easy assembly of such motors to have high resistance to vibration, impact, etc. and good electrical reliability.

Known miniature electric motors are often fitted with capacitors to reduce electrical noise during running. They are typically connected between the motor input terminals, or between the input terminals and the motor casing. However, the installation and connection of these components can be a complex and delicate exercise, requiring considerable skill and time. This reduces the efficiency of the manufacturing and assembly process.

The present invention is directed at a miniature electric motor of known basic assembly (see for example GB-A-2172754), comprising a cylindrical metallic case with a permanent magnet on the inner surface thereof; a cover closing an end of the case; a rotor carrying an armature and a commutator, and rotatably mounted in bearings in the case and cover, the cover having brushes engaging the commutator and connected to input terminals for connection to an external electrical supply, and an electrical component connected to at least one of the input terminals. However, according to the invention, the electrical component is held in place by a spring member made of electrically conductive material and comprising a U-shaped holder portion (91) mounted on the cover, and a W-shaped spring portion (92,93) holding the electrical component (7) against an input terminal (2). This construction considerably facilitates the assembly of the motor, as the installation of the electrical component or components can be accomplished merely by forcing the spring member into place. As the resilience of the spring member both holds the component or components in place, and secures their reliable electrical connection, there is no need for delicate connections to be made, while the assembly has an inherent resistance to vibration.

In one embodiment of the invention, a plurality of electrical components are installed in series between a pair of input terminals. Preferably, the spring member holds two electrical components in place, and is secured to the casing in electrical connection therewith. In another arrangement, an electrical component is connected between an input terminal and the spring member, which spring member is electrically connected to the casing.

The invention will now be described by way of example and with reference to the accompanying schematic drawings wherein:
Figure 1 is a partial sectional side view of a typical miniature motor in which the present invention can be exploited;
Figure 2 is a side view of part of a miniature motor showing a known installation of a capacitor;
Figure 3 is an inside end view of part of a miniature motor showing another installation of capacitors;
Figure 4 is an inside end view illustrating the case cover of a miniature motor embodying this invention;
Figure 5 is a sectional view taken along line A-B-C-D-E in Figure 4.
Figure 6 is a sectional view taken along line F-F in Figure 4; and
Figure 7 is an enlarged perspective view of the spring visible in Figures 4 to 6.

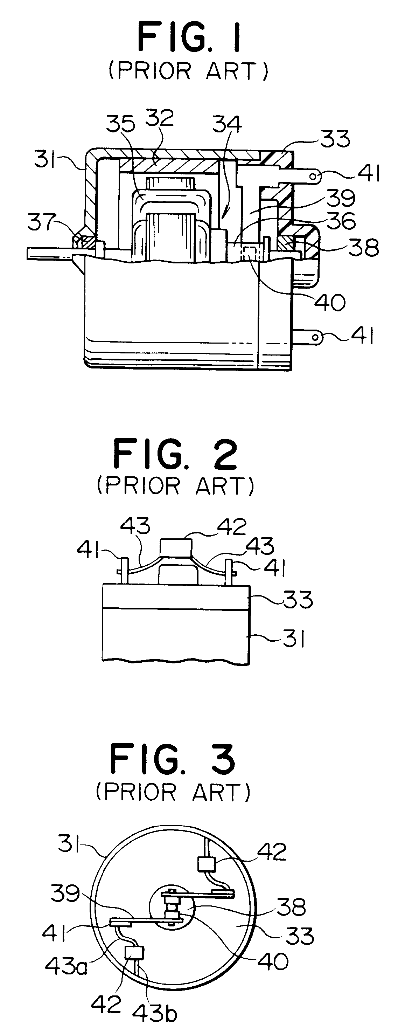

As shown in Figure 1, a case 31 of a metallic material, such as mild steel, is formed into a bottomed hollow cylindrical shape. A permanent magnet (32) of an arc-segment shape, for example, is fixedly fitted to the inner surface of the case 31. A case cover 33 of a thermoplastic resin material fits the open end of the case 31. A rotor 34 bearing an armature 35 facing the permanent magnet 32, and a commutator 36, is rotatably supported by bearings 37 and 38 provided on the case 31 and the case cover 33.

A brush arm 39 formed of an electrically conductive material into a strip shape, has a brush 40 for making sliding contact with the commutator 36, and is mounted in the case cover 33. The case cover 33 also houses an input terminal 41 for external connection of the brush arm 39 to an external d-c source, whereby the motor can be driven in the normal way.

In the miniature motor of the kind illustrated in Figure 1, one or more capacitors as shown in Figures 2 and 3 are commonly installed to reduce electrical noise. Figure 2 shows an example in which a capacitor 42 is connected across the input terminals 41 via lead wires 43. Figure 3 shows two capacitors 42 installed on the inside surface of the case cover 33. One lead wire 43a of the capacitor 42 is connected to the input terminal 41, and the other lead wire 43b is connected to the metallic case 31.

The noise reduction systems shown in Figure 2 and 3 involve complex and troublesome operations to connect the lead wires 43, 43a and 43b. This increases the labour involved, and hence manufacturing costs accordingly. Further, the normal means of connection is soldering which, in a limited space tends to make connections quite unstable, resulting in vulnerability to vibration, impact, etc. during service, and in poor electrical reliability.

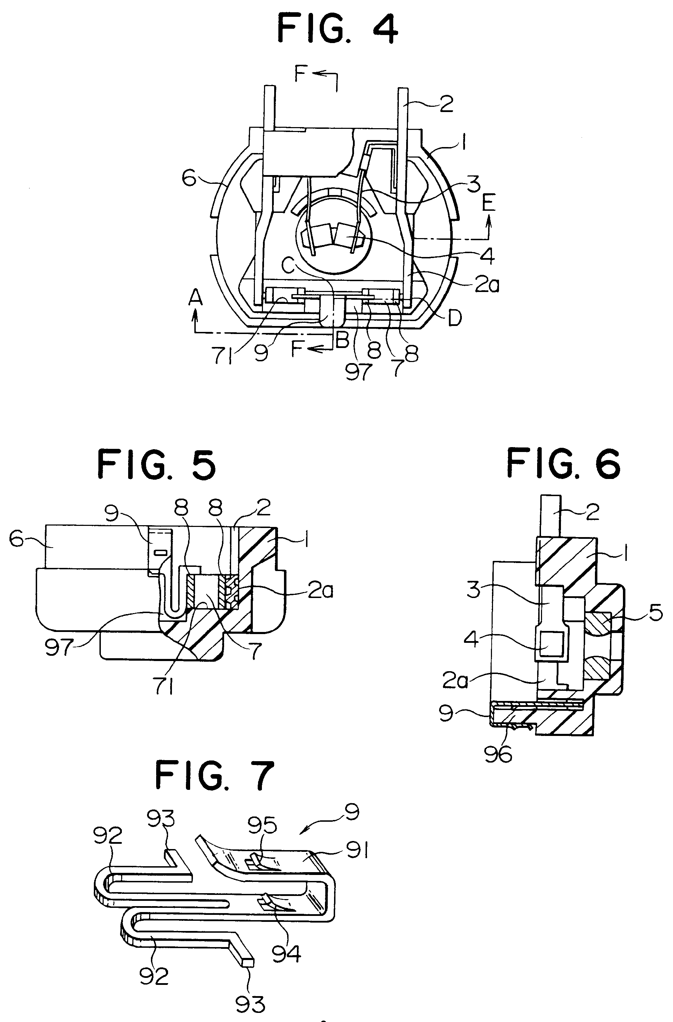

Figures 4 to 6 show a case cover 1 formed of a thermoplastic resin material and having an essentially cup shape, with a pair of input terminals 2 and a pair of brush arms 3. A brush 4 is fitted to the distal free end of each brush arm 3. The input terminal 2 is electrically connected to the brush arm 3. The cover 1 houses a bearing 5, and has a case engaging portion 6 of outside diameter and shape corresponding to the inside diameter and shape of a case (not shown, but corresponding to case 31 in Figures 1 to 3).

A capacitor 7 is disposed in a space 71 provided in the case cover 1, so as to make electrical contact with the extended part 2a of the input terminal 2 via an electrode 8. A spring member 9 made of an electrically conductive material is disposed in an adjacent space 97 so as to force or hold the capacitor 7 on the extended part 2a of the input terminal 2 via the electrode 8. The spring member 9 is partially exposed to the outer circumferential surface of the case cover 1, for example, to make an electrical connection with the case (not shown) when the case cover 1 is engaged with the case.

As shown in Figure 7, the spring member 9 is made of an electrically conductive strip or hoop material, and consists of an essentially U-shaped holder portion 91, an essentially W-shaped spring portion 92 formed by extending and bifurcating one leg of the holder portion 91, and retainer portions 93 formed on the free ends of the spring portions 92. An engaging portion 94 is provided on the holder portion 91, which protrudes from the surface of the holder portion 91 so as to engage with the support portion 96 when the spring member 9 is fitted to the case cover 1, as shown in Figure 6. An earth portion 95 protrudes so as to make contract with the inside surface of the case when the case cover 1 is fitted to the case. The holder portion 91 and the spring portion 92 are formed in an elastically deformable manner.

With the above construction, the capacitor 7 is housed in the housing space 71 and the electrodes 8 are caused to make contact with both sides of the capacitor 7; one electrode 8 being disposed in such a manner as to make contact with the extended part 2a of the input terminal 2. The capacitor 7 is fitted by inserting the spring member 9. The holder portion 91 as shown in Figure 7 holds part of the support portion 96 of the case cover 1, and the spring portion 92 forces the capacitor 7 onto the extended part 2a of the input terminal 2 via the electrode 8 to ensure electrical connection. In this state, the retainer portion 93 pushes the capacitor 7 in the axial direction of the case cover 1 to secure it in place. The engaging portion 94 and the earth portion 95 provided on the holder portion 91 of the spring member 9, both of which are formed in the above-mentioned manner, can tightly hold the spring member 9 and secure electrical connection with the case.

In the embodiment described, an electronic component in the form of a capacitor is fitted to the miniature motor, but similar benefits can be achieved even when coils, resistors and other electronic components are fitted. Needless to say, the amount of elastic deformation, holding force and repulsion force to be imparted to the holder portion and spring portion of the spring member should be selected appropriately taking into account the specifications of the motor and electronic components which are used.

According to the embodiment of the invention described, electronic components can be positively incorporated into a miniature motor merely by forcing the spring member onto the case cover. This makes assembly easy, leading to reduced manufacturing cost. In addition, since the electronic components are fixedly fitted by the elastic deformation of the spring member, the electronic components have high resistance to vibration and impact, and maintain good electrical connection. This leads to improved reliability of the miniature motor.

## Claims

1. A miniature electric motor comprising a cylindrical metallic case (31) with a permanent magnet (32) on the inner surface thereof; a cover (1, 33) closing an end of the case (31); and a rotor (34) carrying an armature (35) and a commutator (36), and rotatably mounted in bearings (37, 5, 38) in the case (31) and cover (1, 33), the cover having brushes (3, 39) engaging the commutator (36) and connected to input terminals (2, 41) for connection to an external electrical supply, and an electrical component (7) is connected to at least one of the input terminals (2),
CHARACTERISED IN THAT said electrical component is held in place by a spring member (9) made of electrically conductive material and comprising a U-shaped holder portion (91) mounted on the cover, and a W-shaped spring portion (92, 93) holding the electrical component (7) against an input terminal (2).

2. A miniature motor according to Claim 1 wherein a plurality of electrical components (7) are installed in series between a pair of input terminals (2).

3. A miniature motor according to Claim 1 wherein an electrical component (7) is connected between an input terminal (2) and the spring member (9) which spring member is electrically connected to the case (31).

4. A miniature motor according to Claim 2 wherein the spring member (9) holds two electrical components (7) in place, and is in electrical connection with the case (31).

5. A miniature motor according to any preceding Claim wherein adjacent space for the spring member (9) and the electrical component (7) is provided inside the case cover.

6. A miniature motor according to any preceding Claim wherein the electronic component is one of a capacitor, a coil, and a resistor.

## Patentansprüche

1. Miniatur-Elektromotor, aufweisend ein zylindrisches Metallgehäuse (31) mit einem Permanentmagneten (32) auf dessen Innenseite; eine Abdeckung (1, 33), die ein Ende des Gehäuses (31) verschließt; und einen Rotor (34), der einen Anker (35) und einen Kommutator (36) trägt und in Lagern (37, 5, 38) im Gehäuse (13) und der Abdeckung (1, 33) drehbar angebracht ist, wobei die Abdeckung (1, 33) an den Kommutator (36) angreifende und mit Eingangsanschlüssen (2, 41) zum Anschluß an eine externe elektrische Versorgung verbundene Bürsten (3, 39) aufweist, und eine elektrische Komponente (7) zumindest mit einem der Eingangsanschlüsse (2) verbunden ist,
dadurch gekennzeichnet,
daß diese elektrische Komponente durch ein Federteil (9) in ihrer Lage gehalten wird, das aus einem elektrisch leitenden Material gefertigt ist und einen U-förmigen, an der Abdeckung angebrachten Halteabschnitt (91) und einen W-förmigen Federabschnitt (92, 93) aufweist, der die elektrische Komponente (7) gegen den Eingangsanschluß (2) hält.

2. Miniaturmotor nach Anspruch 1, in welchem mehrere elektrische Komponenten (7) in Serie zwischen einem Paar Eingangsanschlüssen (2) installiert sind.

3. Miniaturmotor nach Anspruch 1, in welchem eine elektrische Komponente (7) zwischen einen Eingangsanschluß (2) und das Federteil (9) geschaltet ist, wobei das Federteil (9) elektrisch mit dem Gehäuse (31) verbunden ist.

4. Miniaturmotor nach Anspruch 2, in welchem das Federteil (9) zwei elektrische Komponenten (7) in ihrer Lage hält und eine elektrische Verbindung zum Gehäuse (31) aufweist.

5. Miniaturmotor nach einem vorhergehenden Anspruch, in welchem innerhalb der Gehäuseabdeckung nebeneinander Raum für das Federteil (9) und die elektrische Komponente (7) vorgesehen ist.

6. Miniaturmotor nach einem vorhergehenden Anspruch, in welchem die elektrische Komponente eine der Komponenten Kondensator, Spule und Widerstand ist.

## Revendications

1. Moteur électrique miniature comportant un boîtier métallique cylindrique (31) avec un aimant permanent (32) sur la surface intérieure de celui-ci ; un capot (1, 33) fermant une extrémité du boîtier (31) ; et un rotor (34) portant une armature (35) et un collecteur (36), et monté de façon à pouvoir tourner dans des paliers (37, 5, 38) dans le boîtier (31) et le capot (1, 33), le capot comportant des balais (3, 39) venant en contact avec le collecteur (36) et connectés à des bornes d'entrée (2, 41) afin de réaliser une connexion avec une alimentation électrique externe ; et un composant électrique (7) connecté à au moins l'une des bornes d'entrée (2),
caractérisé en ce que ledit composant électrique est maintenu en place par un élément formant ressort (9) fait en un matériau électriquement conducteur et comportant une partie de maintien en forme de U (91) montée sur le capot, et une partie de ressort en forme de W (92, 93) maintenant le composant électrique (7) contre une borne d'entrée (2).

2. Moteur miniature selon la revendication 1, dans lequel plusieurs composants électriques (7) sont installés en série entre deux bornes d'entrée (2).

3. Moteur miniature selon la revendication 1, dans lequel un composant électrique (7) est connecté entre une borne d'entrée (2) et l'élément formant ressort (9), lequel est électriquement connecté au boîtier (31).

4. Moteur miniature selon la revendication 2, dans lequel l'élément formant ressort (9) maintient en place deux composants électriques (7), et est électriquement connecté au boîtier (31).

5. Moteur miniature selon l'une quelconque des revendications précédentes, dans lequel un espace adjacent pour l'élément formant ressort (9) et le composant électrique (7) est présent à l'intérieur du capot de boîtier.

6. Moteur miniature selon l'une quelconque des revendications précédentes, dans lequel le composant électrique est l'un des composants parmi un condensateur, un bobinage, et une résistance.
